**Europäisches Patentamt**

**European Patent Office**

**Office européen des brevets**

(19)

(11) Veröffentlichungsnummer: **0 070 473**

**B1**

(12) # EUROPÄISCHE PATENTSCHRIFT

(45) Veröffentlichungstag der Patentschrift:
**03.09.86**

(51) Int. Cl.⁴: **B 01 D 25/12**

(21) Anmeldenummer: **82106145.4**

(22) Anmeldetag: **09.07.82**

(54) **Membranfilterplatte für Filterpressen.**

(30) Priorität: **22.07.81 DE 3128970**

(43) Veröffentlichungstag der Anmeldung:
**26.01.83 Patentblatt 83/4**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
**DE-A-2 249 897**
**DE-A-2 324 876**
**DE-A-2 754 537**
**DE-C-174 983**
**DE-C-708 967**
**GB-A-2 016 944**
**GB-A-2 069 360**

(73) Patentinhaber: **Rittershaus & Blecher GmbH,**
**Wittensteinstrasse 80- 100, D-5600 Wuppertal 2**
**(DE)**

(72) Erfinder: **Oelbermann, Max, Moltkestrasse 19,**
**D-5630 Remscheid (DE)**
Erfinder: **Rademacher, Karl August, Hatzfelder**
**Strasse 33, D-5600 Wuppertal 2 (DE)**

(74) Vertreter: **Peerbooms, Rudolf, Dipl.- Phys.,**
**Postfach 200 208 Dickmannstrasse 45C, D-5600**
**Wuppertal 2 (DE)**

## Beschreibung

Die Erfindung betrifft eine Filterpresse mit Membranfilterplatten, die jeweils beidseits mit Filtertuch überspannt sind, die eine weichelastische Membran aufweisen, welche eine randseitige, umlaufende Einspannfläche zur permanenten Einspannung zwischen einer Stützplatte und einem Rahmen besitzt, und welche mit mehreren axialen Durchgangskanälen und davon abgezweigten Querleitungen zur Zu- und Ableitung von Medien in die Zwischenräume innerhalb der einzelnen Membranfilterplatten und in die von jeweils zwei aufeinanderfolgenden Membranfilterplatten gebildeten Filterkuchenräume versehen sind.

Derartige Filterpressen sind beispielsweise durch die DE-A 29 33 096 bekannt. Die Membranfilterplatten werden dort in Filterpressen paketweise nebeneinander angeordnet.

Zur Erzielung eines möglichst trockenen Filterkuchens werden, im Anschluß an die Filtration und gegebenenfalls eine Waschung, dort die Filterkuchen über die Membranen mit einem hohen Druck beaufschlagt und ausgepreßt, wonach dann die einzelnen Membranfilterplatten zwecks Kuchenauswurfs nacheinander vom Filterplattenpaket abgezogen werden.

Für eine effektvolle Auspressung des Filterkuchens ist es wesentlich, daß sich die Membranen möglichst gleichmäßig an den Filterkuchen anschmiegen können, wobei sie an ihrem Einspannrand verhältnismäßig starke Umbiegungen und Längungen erfahren aber auch über die Fläche hinweg auf Durchbiegung und Längung beansprucht werden, falls der Filterkuchen mit ungleichmäßiger Dicke angefallen ist. Man hat deshalb bereits versucht, sehr weichelastische Kunststoffmembranen hoher Zerreißfestigkeit einzusetzen, die sich eng an den Filterkuchen anlegen können. Allerdings hat sich gezeigt, daß die Membraneinspannungen sich nach einer verhältnismäßig kurzen Standzeit lockerten und undicht wurden und daß die axialen Durchgangskanäle durch die kriechenden Membranen mehr oder weniger abgesperrt wurden. Denn die in der Membran auftretenden Zugkräfte sind in etwa auf das Flächenzentrum gerichtet, wobei die Bereiche gleicher Verformung konzentrische Ringzonen sind. Da bei der Filterpresse nach der DE-A 29 33 096 die Membranfilterplatten rechteckig sind, umfaßt dort die einen Rechteckrahmen bildende Einspannfläche der Membran Zonen verschiedener Verformungsgrade, was tendenziell zu einer Faltenbildung führt. Aufgrund der permanenten Einspannung der Membran zwischen Stützplatte und Rahmen und aufgrund des plastischen Kriechens weichelastischer Materialien entstehen aber anstelle von Falten streifenförmige Zonen mit Materialverdichtungen und -verdünnungen, wobei letztere relativ schnell zu Undichtigkeiten führen, die trotz großflächiger Membraneinspannung bisher nicht vermieden werden konnten.

Der Erfindung liegt die Aufgabe zugrunde, eine gattungsgemäße Filterpresse zu schaffen, bei welcher die weichelastischen Membranen eine hohe Lebensdauer besitzen und insbesondere auch nach längerem Einsatz eine gute Dichtigkeit behalten.

Zur Lösung dieser Aufgabe ist erfindungsgemäß vorgesehen, daß jede Membran nach außen hin unmittelbar angrenzend an ihre Einspannfläche einen umlaufenden, verdickten Materialwulst aufweist und im Bereich der axialen Durchgangskanäle auf Buchsen sitzt, die koaxial zu den Durchgangskanälen liegen und jeweilsgleichen Innendurchmesser wie die Durchgangskanäle aufweisen. Wie eingehende Untersuchungen gezeigt haben, treten auch bei Membranfilterplatten nach der Erfindung insbesondere im flächigen Einspannungsbereichmit der Zeit ein deutliches Materialkriechen und eine plastische Verformung auf die aber wegen der periodisch ausgeübten Preßdrücke überwiegend nur einwärts zum Zentrum der Membran hin gerichtet sind. Der umlaufende verdickte Materialwulst nach der Erfindung bildet nunmehr aber ein Materialreservoir, aus dem Material in den flächigen Einspannungsbereich nachkriecht, wodurch die Standzeit der Membranfilterplatte beträchtlich erhöht wird. Im Bereich der axialen Durchgangsbohrungen wird die innere Verlagerung der Membran durch die einen freien Durchgang gewährleistenden Buchsen aufgehoben.

Durch die DE-A 22 49 897 ist es zwar bei einem Druckfilter bei welchem die Filterkuchennachpreßmembranen kreisförmig und topfförmig eingezogen sind, bekannt, die Membranen an ihrem Rand mit einem umlaufenden Wulst zu versehen, der selbst zwischen Flanschringen eingespannt ist. Die dortigen weitgehend als formstabiler Topf ausgebildeten Membranen bestehen jedoch aus verhältnismäßig steifem Material, das sich nur begrenzt an den Filterkuchen anschmiegen kann. Da bei einer steiferen Membran ein Materialkriechen nicht in einem merklichen Umfang auftritt, genügt dort eine entsprechend stramme Einspannung des Wulstes. Die Einspannung eines Wulstes aus weichelastischem Material würde dagegen infolge des Materialkriechens in relativ kurzer Zeit ihre Dichtigkeit verlieren.

Der Erfindung zufolge kann der Materialwulst an der Außenseite der Membranfilterplatte oder versenkt in einer umlaufenden Umfangsnut von Stützplatte und Rahmen liegen, was den Vorteil bietet, daß der Wulst und damit das Materialreservoir ringsum leicht überprüft werden kann. Alternativ ist auch möglich, den Wulst verdeckt in stirnseitigen, umlaufenden Nuten von Stützplatte und Rahmen anzuordnen, was die Gefahr einer Beschädigung behebt. Ferner kann die Membran der Erfindung zufolge im Bereich ihrer flächigen Einspannung mit einer Vielzahl von Noppen versehen sein, welche in Ausbuchtungen der Stützplatte und des Rahmens aufgenommen sind. Diese Noppen fixieren in erhöhtem Maße die Membran mit ihrem flächigen Einspannungsbereich, da sie ebenfalls Materialreservoire darstellen, aus denen Meterial mit der Zeit in den flächigen Einspannungsbereich hinein abgezogen wird.

Der Erfindung zufolge kann ferner noch vorgesehen werden, daß die Buchsen in erweiterten Durchgangsbohrungen entweder der Stützplatte oder des Rahmens sitzen und sich an die Buchsen weichelastische, rohrförmige Dichtglieder anschließen, die jeweils die mit besonderen Löchern versehenen Filtertücher durchsetzen und unmittelbar gegen die Stützplatte bzw. den Rahmen der benachbarten Membranfilterplatten sich abdichtend anpressen. Durch diese Maßnahmen werden einmal die Buchsen in ihrer Lage gesichert und zum anderen bei geschlossenem Filterplattenpaket die axialen Durchgangskanäle gegenüber den Filterkuchenräumen bzw. Trüberäumen effektvoll abgedichtet. Solche Buchsen sind grundsätzlich durch die DE-C 17 49 83 bekannt, jedoch sind dort keine Vorkehrungen getroffen die ein Herausfallen der Buchsen während des Filterkuchenauswurfs verhindern.

Schließlich kann der Erfindung zufolge noch vorgesehen werden daß die Membran an ihrer mittigen Durchgangsöffnung ebenfalls einen Materialwulst aufweist.

Die Erfindung wird im folgenden anhand der Zeichnung näher erläutert, in der zeigen:

Fig. 1 in vereinfachter Darstellung eine Membranfilterplatte einer Filterpresse in Seitenansicht,

Fig. 2 in vergrößertem Maßstab einen Schnitt gemäß der Linie II-II nach Fig. 1 durch zwei nebeneinander angeordnete Membranfilterplatten,

Fig. 3 einen Schnitt gemäß der Linie III-III in Fig. 1

Fig. 4 eine abgewandelte Ausführungsform und

Fig. 5 eine weitere abgewandelte Ausführungsform.

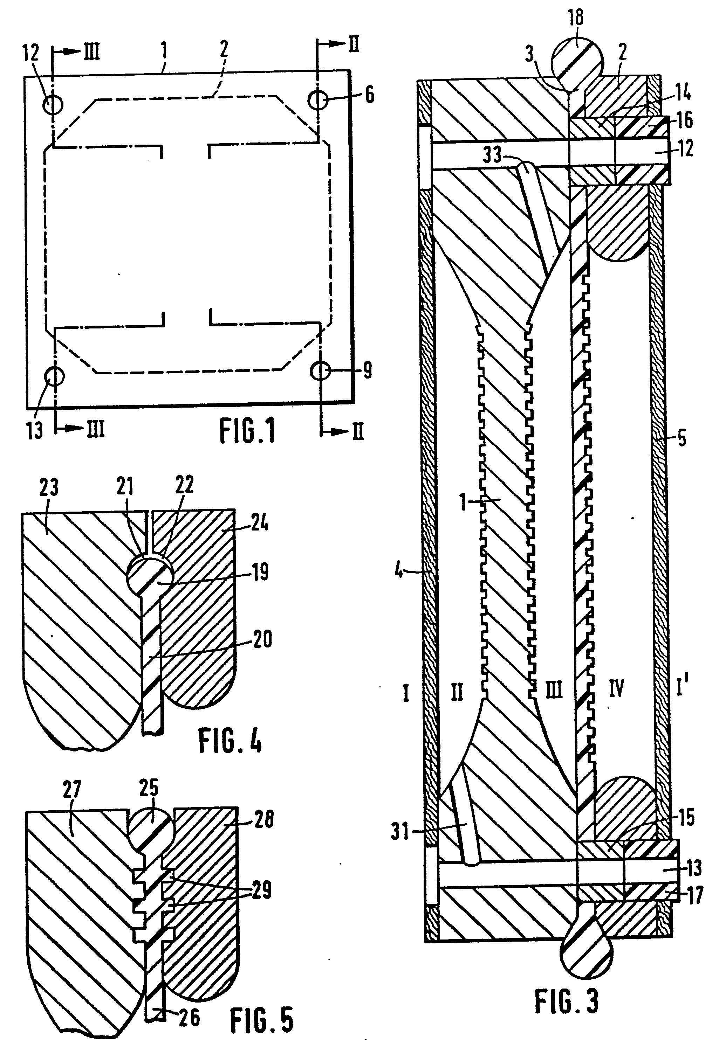

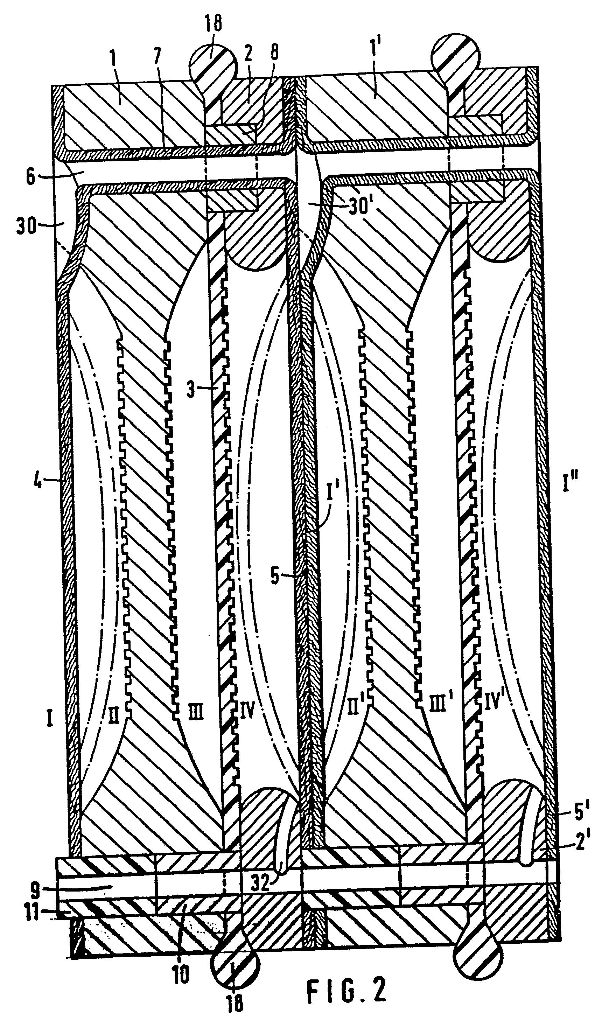

Die Membranfilterplatte nach den Fig. 1 bis 3, besteht aus einer Stützplatte 1, die einen verdickten Rand aufweist, und einem Rahmen 2 zwischen denen eine weichelastische Membran 3 eingespannt ist, und ferner aus zwei an den Außenseiten der Membranfilterplatte liegenden Filtertüchern 4 und 5. Die beiden Filtertücher 4, 5 sind im Bereich des axialen Durchgangskanales 6 durch einen Schlauch miteinander verbunden. Im Bereich des Durchgangskanales 6 sitzt die Membran 3 auf einer Buchse 8 auf, die in einer Erweiterung des Durchgangskanales im Rahmen 2 sitzt und die koaxial und im Innendurchmesser gleich mit dem axialen Durchgangskanal 6 in der Stützplatte 1 bzw. dem Rahmen 2 ist. In analoger Weise sitzt die Membran 3 im Bereich des unteren Durchgangskanales 9 ebenfalls auf einer Buchse 10 auf, die hier in einer Bohrungserweiterung der Stützplatte 1 aufgenommen ist. Nach außen hin schließt sich an die Buchse 10 ein rohrförmiges Dichtglied 11 an, welches das mit einer entsprechenden Lochung versehene Filtertuch 4 durchsetzt, ebenso das Filtertuch einer daran sich anschließenden Membranfilterplatte (vergl. Position 5' in Fig. 2) und sich abdichtend an den Rahmen 2' einer benachbarten Membranfilterplatte anpreßt.

Wie aus Fig. 3 ersichtlich sitzt die Membran 3 auch im Bereich der axialen Durchgangskanäle 12 und 13 jeweils auf einer im Rahmen 2 gelagerten Buchse 14, 15 auf, an denen sich wiederum jeweils ein rohrförmiges Dichtglied 16, 17 anschließt, welches die beiden Filtertücher zweier aneinandergesetzten Membranfilterplatten durchsetzt und sich gegen die nächstfolgende Stützplatte abdichtend anpreßt.

Die Membran 3 ist mit einem umlaufenden Materialwulst 18 versehen, der bei den Ausführungsbeispielen nach den Fig. 2 und 3 an der Umfangsfläche der Membranfilterplatte aufliegt.

Beim Ausführungsbeispiel nach Fig. 4 liegt dagegen der Materialwulst 19 der Membran 20 verdeckt in stirnseitigen, umlaufenden Nuten 21, 22 der Stützplatte 23 und des Rahmens 24.

Fig. 5 veranschaulicht eine Ausführungsform, bei welcher der Materialwulst 25 der Membran 26 versenkt innerhalb einer umlaufenden Umfangsnut von Stützplatte 27 und Rahmen 28 liegt. Die Membran ist ferner in ihrem flächigen Einspannbereich mit einer Vielzahl von Noppen 29 versehen, die von entsprechenden Ausbuchtungen der Stützplatte 27 und des Rahmens 28 aufgenommen werden.

Bei den gezeigten Ausführungsbeispielen bildet der Durchgangskanal 6 den Trübezufuhrkanal, der über eine an den Stützplatten 1 bzw. 1' vorgesehene Querrinne 30 bzw. 30' in den Filterkuchenraum 1 bzw. l' mündet, wobei die Filtertücher etwa die strichpunktierte, gewölbte Lage einnehmen. Aus dem Filtratraum II (bzw. II') zwischen Filtertuch 4 und Stützplatte 1 fließt das Filtrat durch einen Querkanal 31 in den axialen Durchgangskanal 13 ab (vergleiche Fig. 2 und 3). Aus dem anderen Filtratraum IV (bzw. IV') zwischen der Membran 3 und dem Filtertuch 5 fließt das Filtrat über einen Querkanal 32 in den axialen Durchgangskanal 9. Mittels dieser beiden Filtratableitungen kann auch Waschwasser zu- und abgeführt werden.

Die Membran 3 wird über den axialen Durchgangskanal 12 und den davon abgezweigten, in einem Druckmediumraum III (bzw. III') mündenden Querkanal 33 mit einem Druckmedium, z. B. Druckwasser beaufschlagt, wobei die Membran je nach Größe und Form des Filterkuchens aus der Anlage an der Stützplatte (während des Filtriervorganges) über die gezeigte, gestreckte Lage hinaus stark ausgewölbt wird wobei erhebliche innere Zugkräfte auf ihren flächigen zwischen Stützplatte 1 und Rahmen 2 eingespannten Rand ausgeübt werden. Bei einem Kriechen des Materials nach innen wird jedoch von dem Außenwulst 18 Material ständig nachgezogen, wodurch die flächige Einspannung der Membran über lange Standzeiten hinweg dicht bleibt.

Die Erfindung ist in gleicher Weise auch bei anderen Membranfilterplatten realisierbar, z. B. bei Filterplatten mit einem mittigen Trübezufuhrkanal. In einem solchen Fall weist die Membran auch an ihrer mittigen Trübedurchlaßöffnung einen Materialwulst auf, von dem aus Material in mittigen Einspannbereich der Membran abgezogen werden kann.

## Patentansprüche

1. Filterpresse mit Membranfilterplatten, die jeweils beidseits mit Filtertuch (4, 5) überspannt sind, die eine weichelastische Membran (3) aufweisen, welche eine randseitige, umlaufende Einspannfläche zur permanenten Einspannung zwischen einer Stützplatte (1) und einem Rahmen (2) besitzt, und welche mit mehreren axialen Durchgangskanälen (6, 9, 12 13) und davon abgezweigten Querleitungen (30 31, 32, 33) zur Zu- und Ableitung von Medien in die Zwischenräume (II, III, IV) innerhalb der einzelnen Membranfilterplatten und in die von jeweils zwei aufeinanderfolgenden Membranfilterplatten gebildeten Filterkuchenräume (I, I') versehen sind, dadurch gekennzeichnet, daß jede Membran (3) nach außen hin unmittelbar angrenzend an ihre Einspannfläche einen umlaufenden, verdickten Materialwulst (18) aufweist und im Bereich der axialen Durchgangskanäle (6, 9, 12, 13) auf Buchsen (8, 10, 14, 15) sitzt, die koaxial zu den Durchgangskanälen liegen und jeweils gleichen Innendurchmesser wie die Durchgangskanäle aufweisen.

2. Filterpresse nach Anspruch 1, dadurch gekennzeichnet, daß der Wulst (18) der Membran (3) an der Außenseite der Membranfilterplatte anliegt.

3. Filterpresse nach Anspruch 2, dadurch gekennzeichnet, daß der Wulst (25) versenkt in einer umlaufenden Umfangsnut von Stützplatte (27) und Rahmen (28) liegt.

4. Filterpresse nach Anspruch 1, dadurch gekennzeichnet, daß der Wulst (19) verdeckt in stirnseitigen, umlaufenden Nuten (21, 22) von Stützplatte (23) und Rahmen (24) liegt.

5. Filterpresse nach Anspruch 1, dadurch gekennzeichnet, daß die Membran (26) im Bereich ihrer flächigen Einspannung mit einer Vielzahl von Noppen (29) versehen ist, welche in Ausbuchtungen der Stützplatte (27) und des Rahmens (28) aufgenommen sind.

6. Filterpresse nach Anspruch 1, dadurch gekennzeichnet, daß die Buchsen (10, 14, 15) in erweiterten Durchgangsbohrungen entweder der Stützplatte (1) oder des Rahmens (2) sitzen und daß sich an die Buchsen weichelastische, rohrförmige Dichtglieder (11, 16, 17) anschließen, die jeweils die mit besonderen Löchern versehenen Filtertücher (4, 5) durchsetzen und unmittelbar gegen die Stützplatte (1') bzw. den Rahmen (2') der benachbarten Membranfilterplatte sich abdichtend anpressen.

7. Filterpresse nach Anspruch 1, mit einem in der plattenmitte liegenden Durchgangskanal, z.B. mit mittiger Trübezufuhr dadurch gekennzeichnet, daß die Membran an ihrer mittigen Durchgangsöffnung ebenfalls einen Materialwulst aufweist.

## Revendications

1. Filtre-presse avec des plateaux filtrants à membrane qui sont respectivement revêtis des deux côtés par des toiles filtrantes (4, 5) qui sont pourvus d'une membrane (3) souplement élastique ayant une surface de serrage contournante et périphérique pour le serrage permanent entre un plateau (1) de support et un cadre (2), et qui sont munis de plusieurs conduites (6, 9, 12, 13) axiales de passage et de branchements (30, 31, 32, 33) transversaux pour amener des milieux et les dégager des espacement (II, III, IV) à l'intérieur des plateaux filtrants à membrane particuliers et des chambres de gateau de filtre formées entre deux plateaux filtrants à membrane successifs, caractérisé en ce que chaque membrane (3) est pourvue d'un périphérique épais renflement (18) de matériel contournant directement sa surface de serrage et qu'elle est ajustée dans la zone des conduites (6, 9, 12, 13) axiales sur des manchons (8, 10, 14, 15) placé coaxialement par rapport aux conduites axiales et ayant respectivement le même diamètre intérieur comme les conduites axiales.

2. Filtre-presse selon la revendication 1, caractérisé en ce que le renflement (18) de la membrane (3) est placé à la face extérieure du plateau filtrant à membrane.

3. Filtre-presse selon la revendication 2, caractérisé en ce que le renflement (25) est placé dans une rainure périphérique du plateau (27) de support et du cadre (28) d'une manière enfoncée.

4. Filtre-presse selon la revendication 1, caractérisé en ce que le renflement (19) est placé dans des rainures (21, 22) périphériques aux faces du plateau (23) de support et du cadre (24).

5. Filtre-presse selon la revendication 1, caractérisé en ce que la membrane (26) est pourvu dans la zone de sa surface de serrage d'une multiplicité de boutons (29) placé dans des creux du plateau (27) de support et du cadre (28).

6. Filtre-presse selon la revendication 1, caractérisé en ce que les manchons (10, 14, 15) sont placés dans des forages de passage élargis soit du plateau (1) de support soit du cadre (2) et les manchons sont suivi par des éléments d'étanchement (11, 16, 17) souplement élastiques et en forme de tuyeau, qui pénètrent les toiles (4, 5) filtrantes ayant des trous spéciaux et qui sont pressés directement contre le plateau (1') de support respectivement le cadre (2') du plateau filtrant à membrane suivant d'une manière étanchante.

7. Filtre-presse selon la revendication 1, avec une conduite placée au milieu des plateaux, caractérisé en ce que la membrane est pourvue à son trou de passage central d'un renflement de même.

## Claims

1. Filter press with membrane filter plates, each of which is covered on both sides by filter cloths (4, 5), which are provided with a soft-elastic membrane (3) having a peripheral continuous fixing area for a permanent fixing between a supporting plate (1) and a frame (2), and which are provided with several axial through-conduits (6, 9, 12, 13) and transverse branch conduits (30, 31, 32, 33) thereof for draining off mediums or for feeding therewith the interstices (II, III IV) within the several membrane filter plates and the filter cake interspaces formed by two adjacent membrane filter plates; characterised in that each membrane (3) is provided with a peripheral, continuous, thickned material bulb (18) directly adjoining to the external parts of the fixing area and is seated in the reach of the axial through-conduits (6, 9, 12, 13) on bushings (8, 10, 14, 15) being coaxial to the through-conduits and having the same inner diameter as the through-conduits.

2. Filter press as claimed in claim 1, characterised in that the bulb (18) of the membrane (3) is adjacent to the outer side of the membrane filter plate.

3. Filter press as claimed in claim 3, characterised in that the bulb (25) is sunk into a peripheral, continuous groove of the supporting plate (27) and the frame (28).

4. Filter press as claimed in claim 1, characterised in that the bulb (19) is arranged in a concealed way within peripheral, continuous grooves (21, 22) at the faces of the supporting plate (23) and the frame (24).

5. Filter press as claimed in claim 1 characterised in that the membrane (26) is provided in the reach of the fixing area with lots of knubs accomodated to recesses of the supporting plate (27) and the frame (28).

6. Filter press as claimed in claim 1, characterised in that the bushings (10, 14, 15) are arranged within enlarged through-holes either of the supporting plate (1) or of the frame (2) and that soft-elastic, tubular sealing members (11 16, 17) are adjacent to the bushings the sealing members penetrating the filter cloths (4, 5) being provided with special holes, and being directly pressed with a sealing effect against the supporting plate (1') respectively the frame (2') of the adjacent membrane filter plate.

7. Filter press as claimed in claim 1, with a through-conduit arranged in the center of the plate, characterised in that the membrane has a material bulb at its central passage, too.

FIG.1

FIG.4

FIG.5

FIG.3

FIG.2